# EUROPÄISCHE PATENTSCHRIFT

(11) **EP 2 128 561 B1**
(45) Veröffentlichungstag und Bekanntmachung des Hinweises auf die Patenterteilung: **29.10.2014**
(21) Anmeldenummer: 08104146.9
(22) Anmeldetag: 28.05.2008
(51) Int. Cl.: G01B 9/02, G01B 11/02, G01S 17/32

(54) **Interferometrisches Distanzmessverfahren mit verzögertem Chirp-Signal und ebensolche Vorrichtung**
Interferometric distance measuring method with delayed chirp signal and such a device
Procédé de mesure de distance interférométrique doté d'un signal de Chirp décalé et dispositif correspondant

(43) Veröffentlichungstag der Anmeldung: 02.12.2009
(73) Patentinhaber: Leica Geosystems AG, 9435 Heerbrugg (CH)
(72) Erfinder: Jensen, Thomas, 9400 Rorschach (CH); Rohner, Marcel, 9410 Heiden (CH)
(74) Vertreter: Harmann, Bernd-Günther

(56) Entgegenhaltungen:
- JP-A- 57 190 387
- US-A1- 2006 182 383
- US-A1- 2007 189 341
- RIBUN ONODERA ET AL: "Two-wavelength laser-diode heterodyne interferometer with one phasemeter" OPTICS LETTERS,, Bd. 20, Nr. 24, 15. Dezember 1995 (1995-12-15), Seiten 2502-2504, XP002499131
- HARTMANN L ET AL: "An absolute distance interferometer with two external cavity diode lasers" MEASUREMENT SCIENCE AND TECHNOLOGY,, Bd. 19, 4. März 2008 (2008-03-04), Seiten 1-6, XP002499132

## Beschreibung

Die Erfindung betrifft ein interferometrisches Distanzmessverfahren mit verzögertem Chirp-Signal nach dem Oberbegriff des Anspruchs 1 und eine interferometrische Distanzmessvorrichtung nach dem Oberbegriff des Anspruchs 6.

Im Bereich der elektronischen Distanzmessung sind verschiedene Prinzipien und Verfahren bekannt. Ein Ansatz besteht darin, frequenzmodulierte elektromagnetische Strahlung, wie z.B. Licht, auf das zu vermessende Ziel auszusenden und nachfolgend ein oder mehrere Echos von rückstreuenden Objekten, idealerweise ausschliesslich vom zu vermessenden Ziel, zu empfangen, wobei das zu vermessende Ziel sowohl spiegelnde - beispielsweise Retroreflektoren - als auch diffuse Rückstreucharakteristik aufweisen kann.

Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren und zu verstärken. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt. In einer Heterodyn-Interferometer-Anordnung wird eine durchstimmbare Laserlichtquelle zur Absolutdistanzmessung verwendet. In der prinzipiell einfachsten Ausführungsform erfolgt dabei das Durchstimmen der optischen Frequenz der Laserquelle linear. Das empfangene Signal wird mit einem zweiten Signal, welches vom emittierten Lichtsignal abgeleitet wird, überlagert. Die entstehende Schwebungsfrequenz des heterodynen Mischprodukts, dem Interferogramm, ist ein Mass für die Distanz zum Zielobjekt. Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Im optischen Bereich werden als Strahlungsquellen zumeist Laser eingesetzt, welche durch Modulation der externen (beispielsweise Bragg-Grating) oder internen Kavität (beispielsweise Distributed Feedback (DFB) oder Distributed Bragg Reflector (DBR)) gechirpt werden können. Zur Emission und zum Empfang kommen im optischen Bereich Sende- und Empfangsoptiken zum Einsatz, denen ein Detektor oder Quadraturdetektor zur Heterodynmischung, A/D-Wandler und digitalem Signal-Prozessor nachgeschaltet ist.

Ein Beispiel für ein optisches, kohärentes FMCW-Abstandsmessverfahren wird in dem US 4 830 486 beschrieben, wobei diese Verfahren bei kurzer Messzeit eine Genauigkeit im Bereich von Phasenmessverfahren aufweist. Dabei erzeugt ein Chirpgenerator ein linear frequenzmoduliertes Signal, das in ein Mess- und lokales Oszillatorsignal aufgeteilt wird, wobei beide Signale in einem Empfänger überlagert werden.

Die Änderung der Wellenlänge des emittierten Lichtsignals stellt den Massstab der Messung dar. Dieser ist im allgemeinen nicht bekannt und muss daher in einer zusätzlichen Messung bestimmt werden. Hierzu wird im Stand der Technik beispielsweise ein Teil des emittierten Lichts über ein Referenzinterferometer mit definierter Referenzlänge geführt. Aus dem entstehenden Schwebungsprodukt kann auf Grund der bekannten Referenzlänge auf die zeitliche Wellenlängenänderung des emittierten Lichtsignals geschlossen werden. Ist die Referenzlänge nicht bekannt oder instabil, z.B. aufgrund von Temperatureinflüssen, so kann diese über eine zusätzliche Kalibriereinheit, wie z.B. eine Gaszelle oder ein Fabry-Perot-Element, bestimmt werden.

Aus der EP 1 696 201 ist ein solches Distanzmessverfahren mit einem Aussenden frequenzmodulierter elektromagnetischer Strahlung auf wenigstens ein zu vermessendes Ziel und nachfolgendem Empfang unter heterodynem Mischen der vom Ziel zurückgestreuten Strahlung bekannt, wobei die Strahlung parallel über eine interferometrische Referenzlänge geführt wird.

Während ein ruhendes Ziel eine definierte, zeitlich unveränderliche Distanz aufweist, bereiten sich bewegende oder vibrierende Ziele einige Probleme. Eine konstante Bewegung des Ziels führt dabei beim Durchstimmen zu entgegengesetzten Dopplerverschiebung für die unterschiedlichen Richtungen der Frequenzrampe. So führt eine Bewegung beispielsweise zu einer positiven Dopplerverschiebung beim Durchlaufen einer ansteigenden Frequenzrampe wohingegen in diesem Fall beim Durchlaufen der abfallenden Rampe eine negative Dopplerverschiebung bewirkt wird. Durch die Verwendung von aufeinanderfolgenden ansteigenden und abfallenden Rampen kann dieser Effekt kompensiert werden.

Allerdings reduziert die Verwendung von zeitlich aufeinanderfolgenden Rampen, d.h. unterschiedlicher bzw. gegenläufiger Chirps der Laserstrahlung, auch die nutzbare Messrate um den Faktor Zwei, beispielsweise von 1 kHz auf 500 Hz, d.h. auf die Hälfte. Zudem basiert dieser Ansatz darauf, dass während der Durchlaufzeit für die zwei Rampen eine konstante Zielgeschwindigkeit gegeben ist. Beschleunigungen des Ziels während des Messvorgangs oder Vibrationen verursachen Fehler in der gemessenen Distanz.

Um diese Problematik zu beseitigen, wird in der US 7,139,446 vorgeschlagen, zwei zeitgleiche und gegenläufige Frequenzrampen zu verwenden, d.h. Strahlung mit zwei Strahlungsanteilen mit gegenläufigem Chirp zu emittieren, was auch eine Verringerung der Meßrate vermeidet. Um diese Strahlungsanteile meßtechnisch separieren zu können, erfolgt deren Emission mit unterschiedlicher Polarisation. Durch diesen Ansatz können Beschleunigungen erfaßt und Vibrationen eliminiert werden. Den beiden unterschiedlich polarisierten Strahlungsanteilen werden gegenläufige Chirps aufgeprägt, wofür zwei separate Laserquellen verwendet werden. Die Verwendung von zwei Quellen, die jeweils gegenläufig bzw. mit einem Phasenversatz von 180° moduliert werden müssen, erfordert einen geräteseitigen Aufwand, wobei auch eine Synchronisation erforderlich wird, um ein isochrones Verhalten zu erreichen.

In der Veröffentlichung von Onodera, R. und Ishii, Y. "Two-wavelength laser-diode heterodyne interferometry with one phasemeter", Optics Letters, Vol. 20, No. 24, December 1995, wird eine interferometrische Anordnung mit zwei Wellenlängen beschrieben, bei der zwei Laserdioden mit gegenläufigen Sägezahnsignalen angesteuert und somit frequenzmoduliert werden.

Ein ähnlicher Ansatz ist aus der US 2007/0189341 bekannt, bei dem eine zweite Laserdiode auf verschiedene Weise mit einer zu einer ersten Laserdiode unterschiedlichen Chirprate moduliert werden kann, so dass ein gegenläufiger Chirpverlauf realisierbar ist.

In beiden Fällen werden zwei Laserquellen verwendet, deren Modulation getrennt gesteuert wird, so dass zwei Signale und deren Kopplung erforderlich sind.

Der Erfindung liegt daher die Aufgabe zugrunde, ein verbessertes Distanzmessverfahren mit doppeltem Chirp bzw. eine solche Vorrichtung bereitzustellen.

Eine weitere Aufgabe der Erfindung besteht darin, eine entsprechende Distanzmessvorrichtung mit vereinfachtem Aufbau bereitzustellen, insbesondere ohne Verwendung einer zweiten Laserquelle.

Diese Aufgaben werden durch die Gegenstände des Anspruchs 1 bzw. 7 oder der abhängigen Ansprüche gelöst bzw. die Lösungen weitergebildet.

Die erfindungsgemässe Lösung basiert auf einer interferometrischen Distanzmessanordnung, wie z.B. der in der EP 1 696 201 geoffenbarten Heterodyn-Interferometer-Anordnung. Erfindungsgemäss werden die beiden Strahlungsanteile mit ihren gegenläufigen Frequenzverläufen durch eine gemeinsame Laserquelle, z.B. eine Distributed-Feedback(DFB)-Laserdiode, erzeugt. Die Trennbarkeit der Strahlung kann grundsätzlich durch unterschiedliche Polarisation, aber auch in der Signalverarbeitung durch eine Filterung im Frequenzraum oder auf andere Weise bewirkt werden. Die generierte Strahlung weist hierbei zwei Strahlungsanteile auf, die so gewählt werden, dass eine empfangsseitige Separierung bzw. getrennte Auswertung möglich ist.

Die Phasenverschiebung der beiden Frequenzverläufe wird erfindungsgemäss durch eine optische Verzögerungsstrecke realisiert, über die einer der beiden Strahlungsanteile geführt wird. Hierdurch wird eine Synchronisierung der beiden Frequenzverläufe erreicht und eine scheinbare zweite Quelle erzeugt, wobei beide Signale einen identischen und in einem festen Phasenverhältnis zueinander stehenden Frequenzverlauf beim Durchstimmen zeigen. Hierdurch wirken sich Fehler und Nichtlinearitäten auf beiden Signale in gleichem Masse aus.

Wird eine Trennbarkeit der beiden Strahlungsanteile durch unterschiedliche Polarisationen bewirkt, kann die Aufteilung durch einen der Laserdiode nachgeordneten polarisierenden Strahlteiler erfolgen, wobei die optische Verzögerungsstrecke durch eine polarisationserhaltende Faser ausgebildet sein kann.

Ein teilweiser Verzicht auf polarisationserhaltende Fasern und die ersatzweise Verwendung von Single-Mode-Fasern wird möglich, wenn ein polarisationsanpassendes Element verwendet wird, das es erlaubt, die Polarisation der beiden Strahlungsanteile zu justieren bzw. anzupassen. Die Verwendung von polarisationserhalternden Fasern kann bei diesem Ansatz auf die Verzögerungsstrecke und den Detektorteil beschränkt werden, was insbesondere einen Aufbau der Interferometer mit Standard-Single-Mode-Fasern erlaubt.

Für die Charakterisierung des Chirp-Signals kann, wie auch in der EP 1 696 201 beschrieben, ein Referenzinterferogramm aufgenommen werden.

Das erfindungsgemässe Distanzmessverfahren bzw. die erfindungsgemässe Distanzmessvorrichtung werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung der zeitlichen Abhängigkeit der Wellenlänge für interferometrische Distanzmessverfahren;
- Fig.2: die schematische Darstellung der zeitlichen Abhängigkeit der Wellenlänge für interferometrische Distanzmessverfahren mit gegenläufigem Chirp;
- Fig.3a-b: die schematische Darstellung einer ersten Ausführungsform der erfindungsgemässen Distanzmessvorrichtung;
- Fig.4: die schematische Darstellung einer zweiten Ausführungsform der erfindungsgemässen Distanzmessvorrichtung;
- Fig.5: die schematische Darstellung einer dritten Ausführungsform der erfindungsgemässen Distanzmessvorrichtung;
- Fig.6: die Darstellung einer komponentenseitigen Realisierungsmöglichkeit für die zweite Ausführungsform;
- Fig.7: die Darstellung einer komponentenseitigen Realisierungsmöglichkeit für die dritte Ausführungsform und
- Fig.8: die Darstellung einer komponentenseitigen Realisierungsmöglichkeit für eine vierte Ausführungsform.

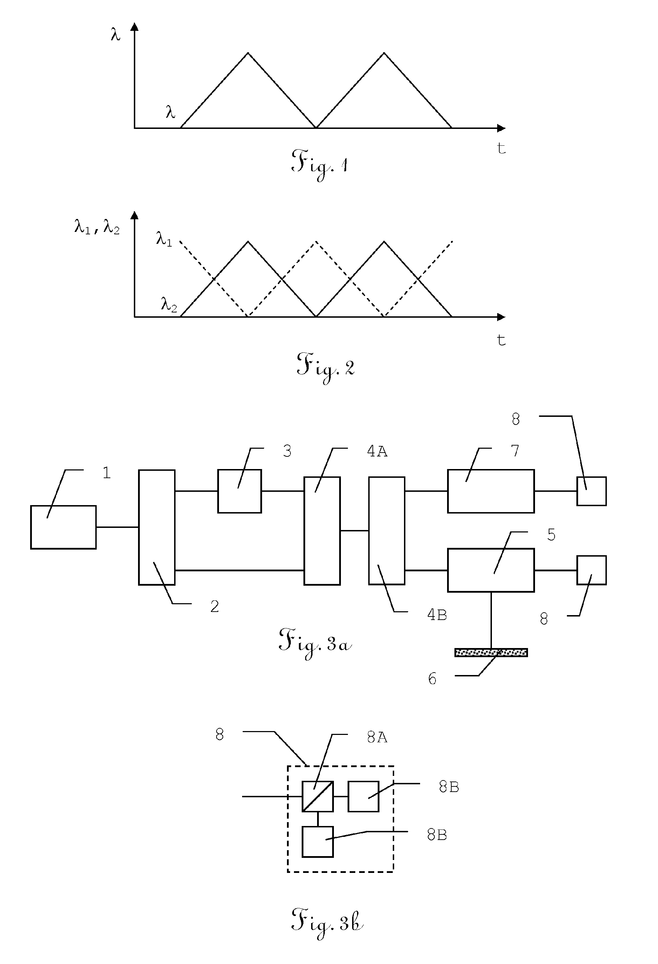

Fig.1 erläutert in schematischer Darstellung die zeitliche Abhängigkeit der Wellenlänge für interferometrische Distanzmessverfahren. Die von dem Distanzmesser emittierte Strahlung wird durch einen Signalgenerator frequenzmoduliert, so dass ansteigende und abfallende Rampen im zeitlichen Verlauf der Wellenlänge λ entstehen. Diese Modulations- bzw. Emissionsform des Stands der Technik erzeugt jedoch ansteigende und abfallende Rampe mit einer zeitlichen Trennung, d.h. in sequentieller Folge, so dass die Messraten halbiert werden und Veränderungen innerhalb der Zeitskala eines Rampenverlaufs bzw. mit entsprechenden Periodizitäten zu Fehlern führen können.

Im Stand der Technik wird daher für interferometrische Distanzmessverfahren die in Fig.2 schematische dargestellte zeitliche Abhängigkeit der Wellenlängen λ₁ und λ₂ der modulierten Strahlungsanteile mit gegenläufigem Chirp beschrieben. Die auf ein Ziel emittierte Strahlung weist somit zwei Strahlungsanteile mit unterschiedlichen zeitlichen Variationen der Wellenlänge, d.h. gegenläufigen Frequenzrampen, auf. Die Strahlungsanteile können dabei insbesondere mit einem Phasenversatz des gegenläufigen Chirps von exakt 180°, also streng gegenphasig, ausgesendet werden. Diese Gegenläufigkeit wird im Stand der Technik durch zwei unterschiedlich modulierte Quellen erzeugt. Erfindungsgemäss wird durch eine Aufteilung der Strahlung einer gemeinsamen oder einzigen Quelle und nachfolgender Verzögerung eines der beiden Strahlungsanteile eine zweite, virtuelle Quelle mit phasenverschobenem Frequenzverlauf generiert. In Fig.2 ist der Frequenzverlauf des unverzögerten Strahlungsanteils mit durchgezogener Linie, der des verzögerten Strahlungsanteils hingegen mit unterbrochener Linie dargestellt.

Werden beide Strahlungsanteile über eine gemeinsame Optik auf ein gemeinsames Ziel emittiert bzw. durch diese empfangen, so muss beim Empfang zur Auswertung der beiden Strahlungsanteile eine Trennung ermöglicht werden, was im Stand der Technik durch eine unterschiedliche Polarisation gelöst wird. Grundsätzlich können jedoch auch andersartige Trennbarkeiten, z.B. spektral bzw. chromatisch oder algorithmisch, in dem erfindungsgemässen Verfahren bzw. einer entsprechenden Vorrichtung Verwendung finden.

Eine erste Ausführungsform des erfindungsgemässen Distanzmessers wird in den Fig.3a-b schematisch dargestellt. Die Distanzmessvorrichtung weist eine Laserquelle mit einer DFB-Laserdiode 1 zur Emission von gechirpter Laserstrahlung auf ein zu vermessendes Ziel 6 auf, wobei die Laserstrahlung frequenzmoduliert wird, so dass diese einen Chirp aufweist. Die von der Laserdiode erzeugte Laserstrahlung wird durch einen polarisierenden Strahlteiler in zwei π- und σ-polarisierte Strahlungsanteile aufgeteilt, wobei einer der beiden Strahlungsanteile vor dem Aussenden gegenüber dem anderen Strahlungsanteil zeitlich verzögert wird, beispielsweise indem er über die hier dargestellte optische Verzögerungsstrecke 3 geführt wird. Die Länge der optischen Verzögerungsstrecke wird dabei so gewählt, dass zumindest für ein Zeitintervall jeder Periode ein gegenläufiger Frequenzverlauf resultiert. In Hinblick auf die Maximierung der nutzbaren Zeiträume und zur Realisierung einer maximalen Messrate wird die Verzögerung bzw. die Länge der Verzögerungsstrecke so gewählt, dass die Strahlungsanteile mit einem Phasenversatz des gegenläufigen Chirps von 180° emittierbar sind. Zur komponentenseitigen Realisierung kann beispielsweise polarisationserhaltende Faser für Verzögerungsstrecke 3 und die Führung des nicht verzögerten Strahlungsanteils verwendet werden, wobei die Emission jeweils in die Polarisationsachsen der Fasern über Polarisationsstrahlteiler erfolgt. Diese separate Einkopplung bleibt für den gesamten Aufbau erhalten, so dass auf diese Weise praktisch zwei Interferometer parallel existieren.

Bei einer spektralen Trennbarkeit der Strahlungsanteile können zwei unterschiedliche Quellen mit einem einzigen Signalgenerator zu Modulation verwendet werden, was zwar immer noch den Aufwand zweier Quellen bedingt, jedoch eine Komplexitätsverringerung und Identität der Frequenzverläufe durch eine gemeinsame Modulation erlaubt. Die zu emittierenden Laserstrahlung kann jedoch auch unter Verwendung einer einzigen Quelle erzeugt werden, z.B. wenn eine nachfolgende spektrale Trennung oder eine nachgeschaltete Erzeugung der beiden Strahlungsanteile, z.B. durch einen optisch parametrischen Oszillator, stattfindet oder aber die zur Erzeugung verwendet Quelle von vorneherein zwei trennbare Trägerwellenlängen erzeugt. Andere mögliche Laserquellen stellen modulierte Elektroabsorptions-Laser (EAL) dar, wie sie z. B. in der EP 1 906 137 beschrieben werden.

In den dargestellten Ausführungsformen wird jedoch beispielhaft die Trennbarkeit durch unterschiedliche Polarisierung der beiden Strahlungsanteile ermöglicht.

Die beiden Strahlungsanteile der Laserstrahlung werden über zwei Faserkoppler 4A und 4B bzw. Multiplexer sowohl in ein Messinterferometer 5, das eine Strahlführung über das zu vermessende Ziel 6 beinhaltet, als auch in ein Referenzinterferometer 7 mit einer definierten Referenzstrecke eingekoppelt, wobei beide Interferometer hier aus Veranschaulichungsgründen rein schematisch als nicht weiter detaillierte funktionale Einheiten dargestellt werden. Ein möglicher konkreter Aufbau der Interferometer ist beispielsweise in Form von Mach-Zehnder-Interferometer gegeben. Die Interferometer weisen jeweils einen Detektor 8 zum Empfang der von dem Ziel 6 zurückgestreuten bzw. über die Referenzstrecke geführten Laserstrahlung auf.

Erfindungsgemäss kann ebenfalls realisiert werden, dass nur ein Strahlungsanteil in das Referenzinterferometer geführt wird, wobei die für die Auswertung der Messinterferogramme benötigten Phaseninformation des zweiten Strahlungsanteils durch zeitliche Verzögerung in der Verarbeitungseinheit - beispielsweise Zwischenspeicherung - erhalten wird.

Das Referenzinterferometer in z.B. Etalon- oder Mach-Zehnder-Konfiguration dient der Berücksichtigung bzw. Kompensation von Nichtlinearitäten im Durchstimmverhalten der Laserquelle. Ist das Verhalten der Laserquelle ausreichend linear oder bekannt und stabil, kann im Prinzip auch auf das Referenzinterferometer verzichtet werden. Dieses ist jedoch in der Regel nicht der Fall. Zusätzlich zum Referenzinterferometer kann auch noch eine hier nicht dargestellte Kalibriereinheit, insbesondere als Gaszelle oder Fabry-Perot-Element, integriert werden, um die Länge des Referenzinterferometers zu bestimmen. Die Verwendung einer solchen Kalibrierkomponente ist beispielsweise aus der EP 1 696 201 bekannt.

Ebenso können Mess- und Referenzinterferometer auch in Common-Path-Geometrie ausgebildet sein, also einen teilweise gemeinsamen Interferometer-Strahlgang für Mess- und lokalen Oszillatorarm aufweisen. Für das Messinterferometer wird hierbei der lokale Oszillatorarm durch einen Reflex an der optischen Austrittsfläche definiert, so dass eine konstante, insbesondere bekannte Distanz festgelegt ist, wobei weitere Rückreflektionen vermieden werden. Der Messarm des Messinterferometers wird hingegen durch die Reflektion am zu vermessenden Ziel 6 definiert. Das rückreflektierte Licht von Mess- und lokalem Oszillatorarm wird in dieser Alternative schliesslich auf einen gemeinsamen Detektor geführt.

Der Aufbau einer Ausführungsform des Detektors 8 ist in Fig.3b näher dargestellt. Die vom Ziel zurückgestreute Strahlung bzw. die im lokalen Oszillatorarm geführte Strahlung wird nach einer Trennung der Strahlungsanteile durch einen polarisationsabhängigen Strahlteiler 8A auf die Detektoreinheiten 8B geführt. Die Signalauswertung kann nachfolgend beispielsweise anhand eines heterodynen interferometrischen Mischverfahrens durchgeführt werden, wobei ein entsprechender Mischer vorgesehen ist oder aber die Detektoreinheiten 8B als solche ausgebildet sind. Die Laserquelle und die Wahl der Polarisation oder Trägerwellenlängen erfolgt in Abhängigkeit von der Trennbarkeit und den detektorseitig verwendbaren Komponenten.

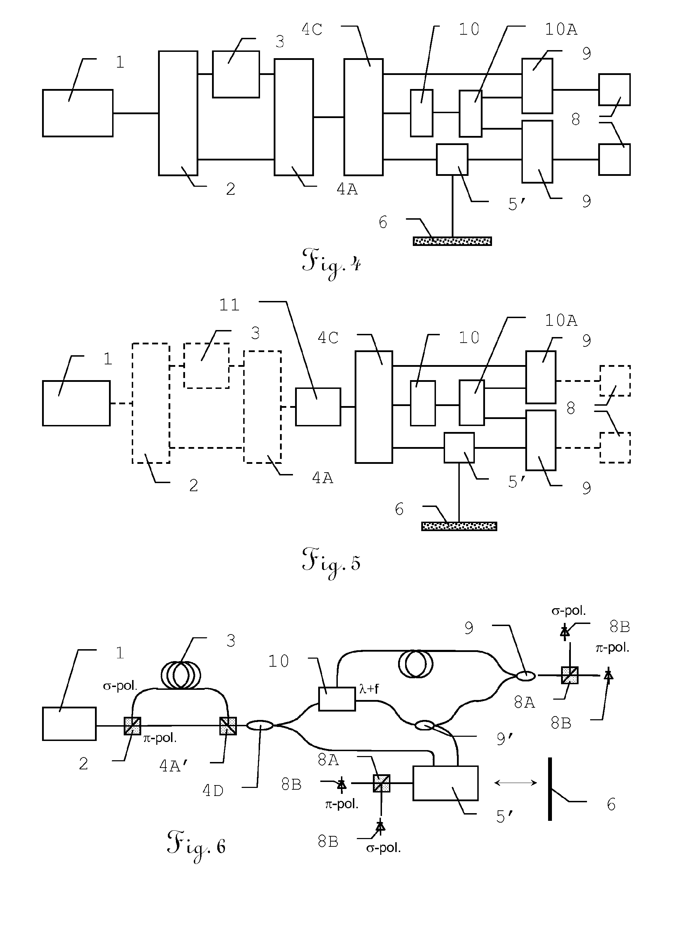

Eine zweite Ausführungsform des erfindungsgemässen Distanzmessers wird in Fig.4 in schematischer Darstellung gezeigt. Diese Ausführungsform entspricht im grundsätzlichen Konzept der ersten Ausführungsform, weist aber einen akusto-optischen Modulator 10 zur Anhebung des lokalen Oszillators der beiden Interferometer um die Modulationsfrequenz des Modulators 10 mit nachfolgendem Strahlteiler 10A auf, was die Detektierbarkeit erleichtert. Die Aufteilung der Strahlung erfolgt deshalb über einen Faserkoppler 4C auf insgesamt drei Ausgänge für die beiden Interferometer und den Modulator 10. Am Ausgang der Interferometer erfolgt vor der Detektion wiederum eine Zusammenführung durch Faserkoppler 9, deren Ausgang jeweils mit dem Detektor 8 verbunden ist.

Für diese zweite Ausführungsform ist im Messinterferometer die zum Aussenden und Empfangen der Laserstrahlung auf ein Ziel 6 verwendete Optik 5' schematisch dargestellt.

Fig.5 zeigt eine dritte Ausführungsform der erfindungsgemässen Distanzmessvorrichtung in schematischer Darstellung. Eine Verringerung des Anteils von polarisationserhaltenden Fasern kann erreicht werden, indem ein der Verzögerungsstrecke 3 nachgeordnetes Polarisations-Kontrollelement 11 zur Anpassung der Polarisationen der beiden Strahlungsanteile verwendet wird. Somit kann ein Teil der optischen Verbindungen zwischen den Komponenten der Distanzmessvorrichtung als Single-Mode-Fasern ausgebildet werden. Das Polarisations-Kontrollelement 11 kompensiert den Einfluss dieser Single-Mode-Fasern, indem die Polarisation solange geändert wird, bis detektorseitig der Empfang beider Strahlungsanteile wieder optimal ist. Durch die Verwendung des Polarisations-Kontrollelements 11 kann die Verwendung von polarisationserhaltenden Fasern auf den Bereich der Verzögerungsstrecke 3 und der parallelen unverzögerten Strahlführung sowie die Detektoren 8 beschränkt werden, was in dieser Darstellung durch unterbrochene Linie veranschaulicht wird.

In Fig.6 erfolgt die Darstellung einer beispielhaften komponentenseitigen Realisierungsmöglichkeit für das Funktionsprinzip der zweiten Ausführungsform. Die Laserstrahlung wird durch eine DFB-Laserdiode 1 erzeugt, wobei die Verbindungen zwischen den optischen Komponenten als polarisationserhaltende, monomodige Fasern ausgebildet sind. Die Laserstrahlung wird durch den polarisierenden Strahlteiler 2 π- und σ-polarisiert, wobei in dieser Ausführungsform der σ-polarisierte Strahlungsanteil über die Verzögerungsstrecke 3 geführt wird, die in Form von Faserwicklungen kompakt realisierbar ist. Bei einer Wiederholrate des Frequenzverlaufs von beispielsweise 10 kHz kann ein isochrones und gegenläufiges Durchlaufen der Frequenzrampen durch eine solche Verzögerungsstrecke von 10 km erreicht werden, wodurch die für eine Phasenverschiebung von 180° erforderliche Verzögerung von 0,05 ms erreicht wird. Beispielsweise beträgt für eine Standard Monomode Faser der max. Verlust 0.2 dB/km (Corning SMF-28e) im Wellenlängenbereich 1.55 µm, was für die Transmission über die exemplarische Verzögerungsstrecke einen Verlust von 2 dB bedeutet.

Beide Strahlungsanteile werden durch einen optischen Koppler 4A' zusammengeführt und nachfolgend wieder über einen Faserkoppler 4D in das Messinterferometer und den akusto-optischen Modulator 10 mit nachfolgendem Strahlteiler 10A eingekoppelt. Die Optik 5' ist als Teleskop mit einem zumindest teilweise gemeinsamen Sende- und Empfangsstrahlgang ausgebildet, wobei das zu vermessende Ziel 6 während der Messung Bestandteil des Messinterferometers ist. Über die optischen Strecken und die Faserkoppler 9, 9' werden die Signale an die Detektoren mit polarisationsabhängigen Strahlteilern 8A den Detektoreinheiten 8B für die beiden Polarisationen weitergeleitet. Die Detektorsignale werden dann über elektrische Leitungen zu einem Signalprozessor geführt. Der Signalprozessor übernimmt die Verarbeitung und Auswertung der Signale und steuert ggf. als Signalgenerator über Steuerleitungen die beiden Strahlquellen.

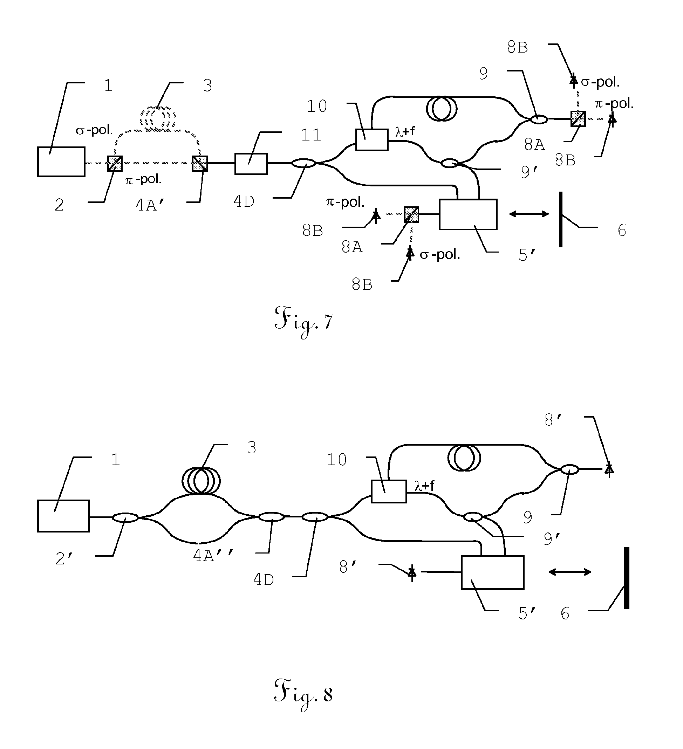

Eine Modifikation der in Fig.6 dargestellten Ausführungsform zeigt Fig.7 als komponentenseitige Realisierungsmöglichkeit für die dritte Ausführungsform. Die Verwendung eines Polarisations-Kontrollelements 11 erlaubt, bei ansonsten gleichem Aufbau, den Verzicht auf polarisationserhaltende Fasern in einem grossen Teil der Distanzmessvorrichtung. Hierfür wird das Polarisations-Kontrollelement 11 hinter der Verzögerungsstrecke 3 angeordnet. Das Polarisations-Kontrollelement 11 passt beide Polarisierungen so an, dass der Empfang und die erzeugten Signale für die Detektoreinheiten 8B optimiert werden. Hierdurch können Einflüsse durch die nicht polarisationserhaltenden Komponenten kompensiert werden. In dieser Figur sind die mit polarisationserhaltenden Komponenten ausgeführten Anteile wiederum mit unterbrochenen Linien dargestellt.

Fig.8 zeigt eine komponentenseitige Realisierungsmöglichkeit für eine vierte Ausführungsform der erfindungsgemässen Distanzmessvorrichtung, wobei deren schematische Darstellung Fig. 4 entspricht. Diese Ausführungsform ähnelt damit im grundsätzlichen Konzept der zweiten Ausführungsform sowie der entsprechenden komponentenseitigen Realisierungsmöglichkeit gemäss Fig.6, erlaubt aber durch eine entsprechende Signalverarbeitung einen vollständigen Verzicht auf polarisationserhaltende Fasern und eine polarisationstrennende Detektion, so dass auf die in Fig.3b dargestellten Detektoren mit getrennte Detektoreinheiten mit vorgeschalteten polarisationsabhängigen Strahlteiler verzichtet werden kann. Somit weisen die Detektoren 8' jeweils nur noch eine Detektoreinheit auf. Auch hier kann durch die Verwendung einer Verzögerungsstrecke 3 im Prinzip auf einen zweiten DFB-Laser verzichtet werden, in dem durch die Verzögerungsstrecke 3 und einer anschließenden Zusammenführung mit dem unverzögerten Lasersignal eine virtuelle bzw. scheinbare zweite Quelle generiert wird, die im gleichen Wellenlängenbereich emittiert. Durch den Einsatz des Modulators 10 und der gemeinsamen Detektion der beiden Strahlungsanteile mit den Detektoren 8' erscheinen die Trägersignale der Interferometer nun auf getrennten Seiten um die Frequenz des Modulators 10, was eine analoge oder spätere softwaremäßige Signaltrennung (Filterung) erlaubt. Bei einem Durchstimmen der Frequenzrampen im Bereich von mehreren GHz werden die Signale der Strahlungsanteile in der Regel durch die begrenzte Bandbreite der Detektoren 8' nicht merklich interferieren. Lediglich im im Kreuzungsbereich kann es bei Laserquellen, die über die eine Kohärenzlänge im Bereich der Verzögerungslänge aufweisen, zu einer Interferenz kommen, wodurch die Paarbildung auf den halben Durchstimmbereich beschränkt ist. Nach dem Umkehrpunkt im Durchstimmen wechseln Strahlungsanteile bzw. der verzögerte und der unverzögerte Anteil bezüglich der Modulator-Frequenz die Seiten.

Wie in diesem Ausführungsbeispiel als spezieller Modifikation kann zudem auf polarisationserhaltende Fasern gänzlich verzichtet werden und auch die Verzögerungsstrecke mit gängigen Faserkopplern 2' und 4A'' in Standard-Monomode-Ausführung aufgebaut werden. Als Detektoren 8' kommen normale Pin-Dioden in Betracht, eine spezielle Signaltrennung mit Polarisationsstrahlteiler ist nicht notwendig.

## Patentansprüche

1. Distanzmessverfahren mit den Schritten
• Aussenden von gechirpter Laserstrahlung mit zwei trennbaren Strahlungsanteilen aus einer Laserquelle auf wenigstens ein zu vermessendes Ziel (6) und über eine lokale Oszillatorstrecke,
wobei die Strahlungsanteile einen gegenläufigen Chirp aufweisen,
e Empfangen der vom Ziel (6) zurückgestreuten und der über die Referenzstrecke geführten Laserstrahlung,
• Umwandeln der empfangenen Laserstrahlung in Signale,
• Bestimmen wenigstens einer Distanz zu dem wenigstens einen Ziel (6) aus den Signalen basierend auf interferometrischem Mischen,
**dadurch gekennzeichnet, dass**
zur Erzeugung des gegenläufigen Chirps einer der Strahlungsanteile vor dem Aussenden aus der Laserquelle durch eine optische Verzögerungsstrecke gegenüber dem anderen Strahlungsanteil zeitlich verzögert wird, so dass eine virtuelle zweite Laserquelle mit gegenüber der Laserquelle versetzter zeitlicher Charakteristik resultiert.

2. Distanzmessverfahren nach Anspruch 1,
**dadurch gekennzeichnet, dass**
einer der Strahlungsanteile so verzögert wird, dass die Strahlungsanteile mit einem Phasenversatz des gegenläufigen Chirps von 180° ausgesendet werden.

3. Distanzmessverfahren nach Anspruch 1 oder 2,
**dadurch gekennzeichnet, dass**
die zwei Strahlungsanteile eine unterschiedliche, orthogonale Polarisierung aufweisen.

4. Distanzmessverfahren nach einem der vorangehenden Ansprüche,
**dadurch gekennzeichnet, dass**
die zwei Strahlungsanteile unterschiedliche Trägerwellenlängen aufweisen, insbesondere durch gegenläufige Verschiebung einer gemeinsamen Trägerwellenlänge.

5. Distanzmessverfahren nach Anspruch 4,
**dadurch gekennzeichnet, dass**
eine analoge oder softwareseitige digitale Signaltrennung für die beiden Strahlungsanteile erfolgt.

6. Distanzmessverfahren nach einem der vorangehenden Ansprüche,
**dadurch gekennzeichnet, dass**
beim Bestimmen der wenigstens einen Distanz eine Referenzierung zur Berücksichtigung oder Kompensation von Nichtlinearitäten beim Erzeugen des Chirps dient.

7. Distanzmessvorrichtung zur Durchführung des Verfahrens nach einem der Ansprüche 1 bis 6 mit wenigstens
• einer frequenzmodulierbaren Laserquelle zur Erzeugung und zum Aussenden von gechirpter Laserstrahlung auf ein zu vermessendes Ziel (6), wobei die Laserstrahlung zwei trennbare Strahlungsanteile mit gegenläufigem Chirp aufweist,
• einem Signalgenerator zur Modulation der Laserquelle,
• einem Messinterferometer (5) mit einem Detektor (8,8') zum Empfang der von einem Ziel (6) zurückgestreuten Laserstrahlung,
• einem Mischer zur Durchführung eines heterodynen interferometrischen Mischverfahrens,
**dadurch gekennzeichnet, dass**
zur Erzeugung des gegenläufigen Chirps die Laserquelle eine optische Verzögerungsstrecke (3) zum Verzögern eines der beiden Strahlungsanteile gegenüber dem anderen vor dem Aussenden aus der Laserquelle aufweist, so dass eine virtuelle zweite Laserquelle mit gegenüber der Laserquelle versetzter zeitlicher Charakteristik resultiert.

8. Distanzmessvorrichtung nach Anspruch 7,
**dadurch gekennzeichnet, dass**
die Länge der optischen Verzögerungsstrecke (3) so gewählt ist, dass die Strahlungsanteile mit einem Phasenversatz des gegenläufigen Chirps von 180° emittierbar sind.

9. Distanzmessvorrichtung nach Anspruch 7 oder 8,
**dadurch gekennzeichnet, dass**
die Laserquelle einen polarisierenden Strahlteiler (2) zur Erzeugung der trennbaren Strahlungsanteile aufweist.

10. Distanzmessvorrichtung nach Anspruch 9,
**gekennzeichnet durch**
ein der Verzögerungsstrecke (3) nachgeordnetes Polarisations-Kontrollelement (11) zur Anpassung der Polarisationen der beiden Strahlungsanteile.

11. Distanzmessvorrichtung nach Anspruch 10,
**dadurch gekennzeichnet, dass**
ein Teil der optische Verbindungen zwischen Komponenten der Distanzmessvorrichtung als Single-Mode-Fasern ausgebildet sind.

12. Distanzmessvorrichtung nach einem der Ansprüche 7 bis 11,
**gekennzeichnet durch**
einen akusto-optischen Modulator (10) zur Anhebung des lokalen Oszillators der beiden Interferometer um eine Modulationsfrequenz des Modulators (10).

13. Distanzmessvorrichtung nach Anspruch 12,
**dadurch gekennzeichnet, dass**
beide Strahlungsanteile durch einen gemeinsamen Detektor (8') empfangen werden und nachfolgend eine analoge oder softwareseitige digitale Signaltrennung für die beiden Strahlungsanteile erfolgt.

14. Distanzmessvorrichtung nach einem der Ansprüche 7 bis 13,
**gekennzeichnet durch**
ein Referenzinterferometer zur Berücksichtigung oder Kompensation von Nichtlinearitäten beim Erzeugen des Chirps.

## Claims

1. Distance-measuring method comprising the steps
• emission of chirped laser radiation having two separable radiation components from a laser source to at least one target (6) to be surveyed and via a local oscillator path,
the radiation components having an opposite chirp,
• reception of the laser radiation scattered back from the target (6) and the laser radiation passed via the reference path,
• conversion of the laser radiation received into signals,
• determination of at least one distance to the at least one target (6) from the signals on the basis of interferometric mixing,
**characterized in that**, for generation of an opposite chirp, one of the radiation components is delayed in time relative to the other radiation component by an optical delay path prior to emission from the laser source, so that a virtual second laser source with time characteristic offset relative to the laser source results

2. Distance-measuring method according to Claim 1, **characterized in that** one of the radiation components is delayed so that the radiation components are emitted with a phase offset of the opposite chirp of 180°.

3. Distance-measuring method according to Claim 1 or 2, **characterized in that** the two radiation components have a different, orthogonal polarization.

4. Distance-measuring method according to any of the preceding claims, **characterized in that** the two radiation components have different carrier wavelengths, in particular by opposite shifting of a common carrier wavelength.

5. Distance-measuring method according to Claim 4, **characterized in that** analogue or software digital signal separation is effected for the two radiation components.

6. Distance-measuring method according to any of the preceding claims, **characterized in that** referencing serves for taking into account or compensating nonlinearities in the production of the chirp during determination of the at least one distance.

7. Distance-measuring apparatus for carrying out the method according to any of Claims 1 to 6, comprising at least
• a frequency-modulatable laser source for producing and for emitting chirped laser radiation to a target (6) to be surveyed, the laser radiation having two separable radiation components with opposite chirp,
• a signal generator for modulating the laser source,
• a measuring interferometer (5) having a detector (8, 8') for receiving the laser radiation scattered back from a target (6),
• a mixer for carrying out a heterodyne interferometric mixing method,
**characterized in that**, for generating the opposite chirp, the laser source has an optical delay path (3) for delaying one of the two radiation components with respect to the other one before the emitting rom the laser source, so that a virtual second laser source with time characteristic offset relative to the laser source results.

8. Distance-measuring apparatus according to Claim 7, **characterized in that** the length of the optical delay path (3) is chosen so that the radiation components can be emitted with a phase offset of the opposite chirp of 180°.

9. Distance-measuring apparatus according to Claim 7 or 8, **characterized in that** the laser source has a polarizing beam splitter (2) for producing the separable radiation components.

10. Distance-measuring apparatus according to Claim 9, **characterized by** a polarization control element (11) arranged downstream of the delay path (3) and intended for adapting the polarizations of the two radiation components.

11. Distance-measuring apparatus according to Claim 10, **characterized in that** a part of the optical connections between components of the distance-measuring apparatus are in the form of single-mode fibres.

12. Distance-measuring apparatus according to any of Claims 7 to 11, **characterized by** an acousto-optical modulator (10) for raising the local oscillator of the two interferometers by a modulation frequency of the modulator (10).

13. Distance-measuring apparatus according to Claim 12, **characterized in that** both radiation components are received by a common detector (8') and analogue or software digital signal separation is subsequently effected for the two radiation components.

14. Distance-measuring apparatus according to any of Claims 7 to 13, **characterized by** a reference interferometer for taking into account or compensating nonlinearities during the production of the chirp.

## Revendications

1. Procédé de mesure de distance avec les étapes :
• émission de rayonnement laser avec chirp avec deux composantes de rayonnement séparables à partir d'une source laser sur au moins une cible à mesurer (6) et par une distance d'oscillateur locale, les composantes de rayonnement présentant un chirp opposé,
• réception du rayonnement laser rétrodiffusé par la cible (6) et guidé par la distance de référence,
• transformation du rayonnement laser reçu en signaux,
• détermination d'au moins une distance avec la cible qui existe au moins (6) à partir des signaux sur la base d'un mélange interférométrique,
**caractérisé en ce que**,
pour la génération du chirp contraire, l'une des composantes de rayonnement est retardée temporellement par rapport à l'autre composante de rayonnement avant l'émission à partir de la source laser par une distance de retard optique si bien qu'il résulte une seconde source laser virtuelle avec une caractéristique temporelle décalée par rapport à la source laser.

2. Procédé de mesure de distance selon la revendication 1, **caractérisé en ce que** l'une des composantes de rayonnement est retardée de telle manière que les composantes de rayonnement sont émises avec un décalage de phase du chirp contraire de 180°.

3. Procédé de mesure de distance selon la revendication 1 ou 2, **caractérisé en ce que** les deux composantes de temps présentent une polarisation orthogonale différente.

4. Procédé de mesure de distance selon l'une des revendications précédentes, **caractérisé en ce que** les deux composantes de temps présentent différentes longueurs d'onde porteuse, en particulier par un décalage contraire d'une longueur d'onde porteuse commune.

5. Procédé de mesure de distance selon la revendication 4, **caractérisé en ce qu'**une séparation de signal analogique ou numérique logicielle a lieu pour les deux composantes de rayonnement.

6. Procédé de mesure de distance selon l'une des revendications précédentes, **caractérisé en ce que**, lors de la détermination de la distance qui existe au moins, un référencement sert à prendre en compte ou à compenser des non-linéarités lors de la génération du chirp.

7. Dispositif de mesure de distance pour exécuter le procédé selon l'une des revendications 1 à 6 avec au moins
• une source laser à fréquence modulable pour la génération et l'émission de rayonnement laser avec chirp sur une cible à mesurer (6), le rayonnement laser présentant deux composantes de rayonnement séparables avec chirp contraire,
• un générateur de signal pour la modulation de la source laser,
• un interféromètre de mesure (5) avec un détecteur (8, 8') pour la réception du rayonnement laser rétrodiffusé par la cible (6),
• un mélangeur pour exécuter un procédé de mesure interférométrique hétérodyne,
**caractérisé en ce que**, pour la génération du chirp contraire, la source laser présente une distance de retard optique (3) pour retarder l'une des deux composantes de rayonnement par rapport à l'autre avant l'émission à partir de la source laser si bien qu'il résulte une seconde source laser virtuelle avec une caractéristique temporelle décalée par rapport à la source laser.

8. Dispositif de mesure de distance selon la revendication 7, **caractérisé en ce que** la longueur de la distance de retard optique (3) est sélectionnée telle que les composantes de rayonnement peuvent être émises avec un décalage de phase du chirp contraire de 180°.

9. Dispositif de mesure de distance selon la revendication 7 ou 8, **caractérisé en ce que** la source laser présente un séparateur de faisceau polarisant (2) pour générer les composantes de rayonnement séparables.

10. Dispositif de mesure de distance selon la revendication 9, **caractérisé par** un élément de contrôle de polarisation (11) placé en aval de la distance de retard (3) pour l'adaptation des polarisations des deux composantes de rayonnement.

11. Dispositif de mesure de distance selon la revendication 10, **caractérisé en ce qu'**une partie des liaisons optiques entre des composantes du dispositif de mesure de distance est configurée comme des fibres monomodes.

12. Dispositif de mesure de distance selon l'une des revendications 7 à 11, **caractérisé par** un modulateur acousto-optique (10) pour relever l'oscillateur local des deux interféromètres d'une fréquence de modulation du modulateur (10).

13. Dispositif de mesure de distance selon la revendication 12, **caractérisé en ce que** les deux composantes de rayonnement sont reçues par un détecteur commun (8') et qu'ensuite une séparation de signal analogique ou numérique logicielle a lieu pour les deux composantes de rayonnement.

14. Dispositif de mesure de distance selon l'une des revendications 7 à 13, **caractérisé par** un interféromètre de référence pour prendre en compte ou à compenser des non-linéarités lors de la génération du chirp.
